Europäisches Patentamt

European Patent Office

Office européen des brevets

(19)

(11) Veröffentlichungsnummer: **0 048 766**
**B1**

(12) **EUROPÄISCHE PATENTSCHRIFT**

(45) Veröffentlichungstag der Patentschrift:
09.05.84

(51) Int. Cl.³: **B 27 G 3/00**

(21) Anmeldenummer: **80105809.0**

(22) Anmeldetag: **25.09.80**

(54) Vorrichtung zum beidseitigen Abkehren des Sägemehls von Holzbohlen.

(43) Veröffentlichungstag der Anmeldung:
**07.04.82 Patentblatt 82/14**

(45) Bekanntmachung des Hinweises auf die Patenterteilung:
**09.05.84 Patentblatt 84/19**

(84) Benannte Vertragsstaaten:
**AT BE CH FR GB IT LI LU NL SE**

(56) Entgegenhaltungen:
**DE - C - 434 704**

(73) Patentinhaber: **Tombers, Ludwig, Bergstrasse 1,
D-5531 Schutz (DE)**

(72) Erfinder: **Tombers, Ludwig, Bergstrasse 1,
D-5531 Schutz (DE)**

(74) Vertreter: **Schönherr, Wolfgang et al, Patentanwälte
Wolfgang Schönherr Dipl.-Ing. Karl-Heinz Serwe
Hawstrasse 28, D-5500 Trier (DE)**

## Beschreibung

Die Erfindung betrifft eine Vorrichtung zum beidseitigen Abkehren des Sägemehls von Holzbohlen mit einer rotierenden Bürstenwalze.

Da beim Zersägen von Baumstämmen zu Brettern oder Bohlen an den Schnittstellen Sägemehl haften bleibt und sich diese Sägemehlreste bei einer längeren Lagerung des Schnittholzes nachteilig auswirken, ist es notwendig, diese Sägemehlreste durch Abkehren zu entfernen. Im allgemeinen werden die geschnittenen Bohlen von Hand abgekehrt. Es ist jedoch auch bekannt, der Sägemaschine eine Bretterbürstmaschine nachzuordnen, zwischen deren Walzenbürsten die geschnittenen Bretter hindurchgeführt werden (DE-PS 611 624).

Die bekannte Vorrichtung hat jedoch den Nachteil, dass sie für Holz, das in einem Vollgatter eingeschnitten wird, ungeeignet ist, da hierbei mehrere Bretter oder Bohlen gleichzeitig die Sägemaschine verlassen und schnell weggeführt werden müssen. Ein Vereinzeln des geschnittenen Holzes und Hindurchführen durch eine Bürstmaschine wäre jedoch für einen zügigen Transport des Schnittgutes vom Gatter weg hinderlich.

Aufgabe der Erfindung ist es daher, eine Vorrichtung zum beidseitigen Abkehren des Sägemehls von Holzbohlen, die mit einem Vollgatter eingeschnitten sind, vorzuschlagen, bei der der Bürstvorgang während des Stapelvorgangs in Lagen erfolgt.

Die Aufgabe wird nach der Erfindung dadurch gelöst, dass die Walzenbürste oberhalb eines die Bohlen haltenden Traggerüstes und unterhalb einer Bohlenhebevorrichtung quer zu ihrer Drehachse waagerecht verschiebbar angeordnet ist.

Vorteilhaft sind die Enden der Walzenbürste in je einem Schlitten gelagert und die Schlitten sind auf zwei im Abstand zueinander angeordneten, waagerechten Schienen über Ketten angetrieben hin- und herverschiebbar.

Das die Bohlen haltende Traggerüst weist vorzugsweise eine rutschfeste Bohlenauflagefläche auf. Die Walzenbürste ist vorteilhaft höhenverstellbar.

Nach einer bevorzugten Ausführungsform sind an den beiden Enden der Vorschubbewegungsstrecke der Walzenbürste Endschalter angeordnet, die mit dem Antrieb einer Zuführvorrichtung für die Bohleneintragung und dem Antrieb der Bohlenhebevorrichtung verbunden sind.

Das Verfahren zum beidseitigen Abkehren des Sägemehls von Holzbohlen mittels einer rotierenden Walzenbürste ist erfindungsgemäss dadurch gekennzeichnet, dass mehrere Bohlen nebeneinanderliegend einem Traggerüst zugeführt werden, dass die rotierende Walzenbürste auf der Oberseite der Bohlen in Bohlenlängsrichtung quer zu ihrer Drehachse verschoben wird, dass die Bohlen durch eine Hebevorrichtung angehoben werden, dass die rotierende Walzenbürste unter Beibehalten ihrer Drehrichtung auf der Unterseite der hochgehobenen Bohlen zurückgezogen wird und dass die beidseitig gekehrte Bohlen einem Bohlenstapel durch Querverschieben und Senken der Hebevorrichtung zugeführt werden.

Die Erfindung ist in den Zeichnungen beispielhaft dargestellt. Es zeigen:

Fig. 1 die Vorrichtung in Draufsicht,
Fig. 2 die Vorrichtung in Seitenansicht,
Fig. 3 die Anordnung der Walzenbürste in Draufsicht,
Fig. 4 einen Schnitt nach IV–IV der Fig. 3.

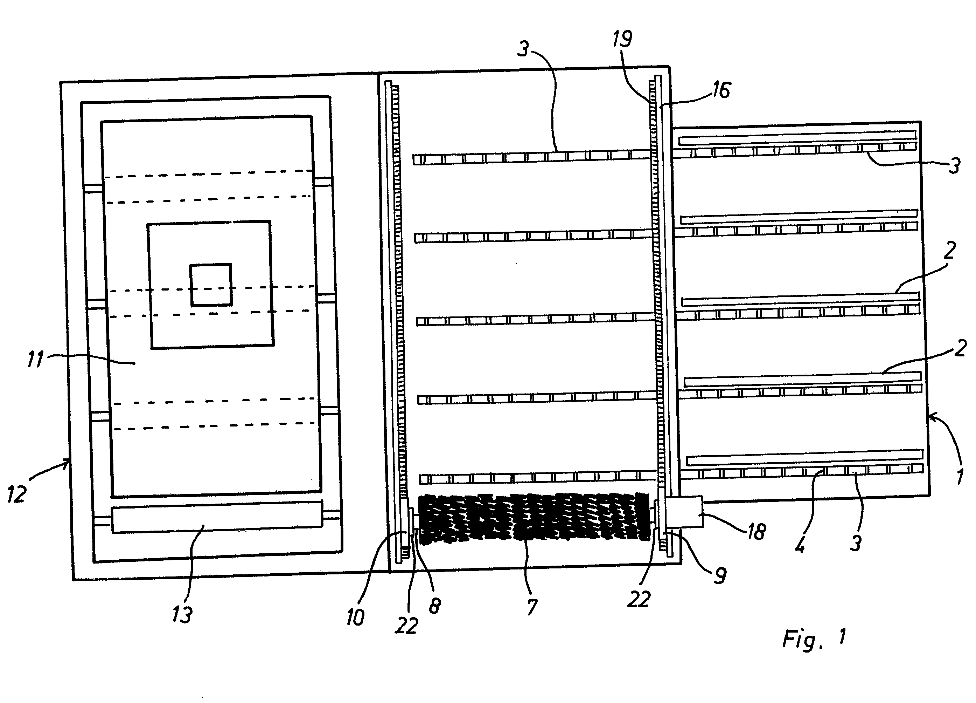

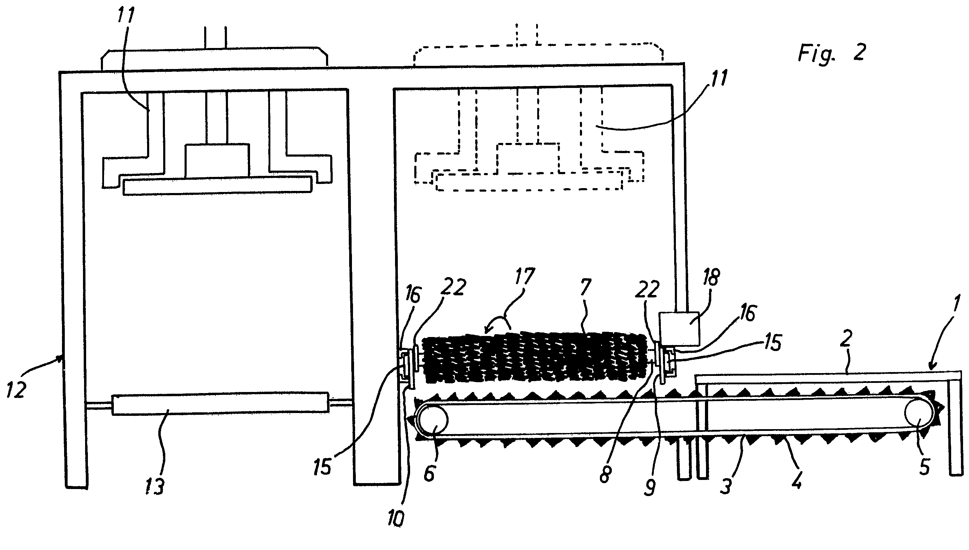

Die Vorrichtung nach den Fig. 1 und 2 weist ein Traggerüst 1 auf, auf das die abzukehrenden Bohlen gelegt werden. Das Traggerüst 1 besteht aus mehreren, im Abstand zueinander angeordneten Halteleisten 2 mit abgerundeter Oberkante und jeder Halteleiste benachbart und parallel zu ihnen verlaufenden Förderketten 3. Die Förderketten 3 sind in ihrem Obertrum mit Haltezacken 4 versehen und laufen über Kettenräder 5 und 6. Die Oberkante der Halteleisten 2 überragt die Spitzen der Haltezacken 4, wenn sich die Halteleisten in angehobener Stellung befinden. Die Halteleisten können jedoch derart gesenkt werden, dass ihre Oberkante von den Haltezacken 4 überragt wird.

Oberhalb des in Förderrichtung der Förderketten 3 vorderen Abschnittes ist eine Walzenbürste 7 angeordnet, deren Bürstenachse 8 parallel zur Förderrichtung der Förderketten 3 verläuft. Die Enden der Walzenbürste 7 sind in quer zur Bürstenachse 8 verfahrbaren Schlitten 9 und 10 gelagert.

Oberhalb der Walzenbürste 7 ist eine Hebevorrichtung 11 angeordnet, die in senkrechter Richtung und in Förderrichtung der Förderketten 3 verfahrbar ist.

In Verlängerung der Förderkette 3 über das vordere Kettenrad 5 hinaus befindet sich eine Stapelvorrichtung 12 mit Förderrollen 13, deren Drehachse gleichgerichtet der Förderrichtung der Förderketten 3 ist.

Die abzukehrenden Bohlen werden vom Sägegatter kommend dem Traggerüst 1 zugeführt und es werden mehrere Bohlen zur Lagenbildung auf die Halteleisten 2 nebeneinander und quer zur Förderrichtung der Förderketten 3 gelegt. Nach Absenken der Halteleisten 2 kommen die Bohlen auf die Spitzen der Haltezacken 4 zu liegen, und werden mit Hilfe der Förderketten 3 unter die Walzenbürste 7 transportiert. Daraufhin wird die sich drehende Walzenbürste quer zur Förderrichtung der Förderketten 3 über die Bohlen verfahren, wobei die Borsten der Walzenbürste 7 die Oberfläche der Bohlen abkehren und vom Sägemehl befreien. Die Bohlen bleiben dabei unverrutschbar auf den Haltezacken 4 liegen, und die Walzenbürste 7 dreht sich entgegengesetzt ihrer Verfahrrichtung, so dass sie das Sägemehl vor sich herschiebend kehrt.

Nachdem die Walzenbürste 7 ihre Endstellung erreicht hat und ausser Berührung mit den abgekehrten Bohlen ist, wird die Hebevorrichtung 11 auf die Bohlen gesenkt. Die Hebevorrichtung 11 hebt die Bohlen soweit an, dass die Walzenbürste 7 bei ihrem Rücklauf zur Ausgangsstellung unter Beibehaltung ihrer Drehrichtung die Unterseite der angehobenen Bohlen abkehren kann. Danach wird die Hebevorrichtung über die Stapelvorrichtung 12 gefahren und die Bohlen auf die Förderrollen 13 abgesetzt.

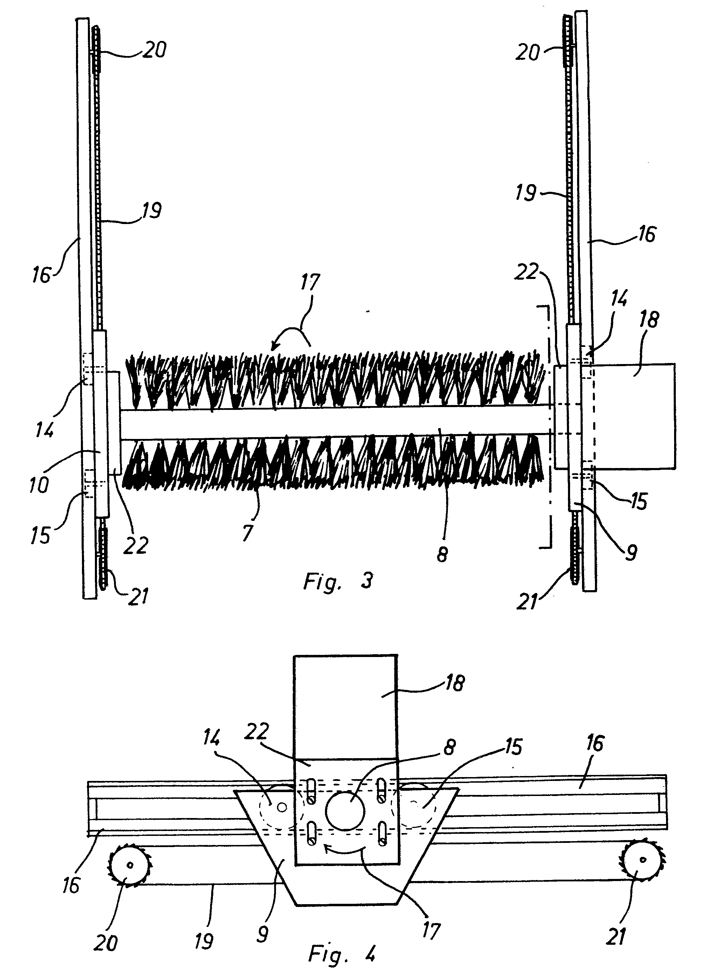

Wie besonders die Fig. 3 und 4 erkennen lassen, sind die Schlitten 9 bzw. 10, in denen die Enden der Walzenbürste 7 gelagert sind, mit Laufrollen 14 und 15 ausgerüstet. Die Laufrollen sind in Schienen 16 geführt, die sich quer zur Förderrichtung oberhalb des die Bohlen haltenden Traggerüstes 1 und unterhalb der Hebevorrichtung 11 erstrecken.

Die Walzenbürste 7 dreht sich stets in gleicher Drehrichtung, die durch den Pfeil 17 angedeutet ist, unabhängig davon, in welche Richtung die Walzenbürste 7 verfahren wird. Der Antrieb für die Walzenbürste 7 wird durch einen Motor 18 bewirkt, der auf dem Schlitten 9 sitzt.

Die Schlitten 9 bzw. 10 sind mit einer Antriebskette 19 verbunden, die über Kettenräder 20 und 21 läuft und den ihr zugeordneten Schlitten mitnimmt.

Die die Enden der Walzenbürste 7 haltenden Lagerschilder 22 sind gegenüber dem Schlitten 9 bzw. 10 höhenverstellbar, so dass der Abstand der Borsten der Walzenbürste 7 zur abzukehrenden Bohlenfläche entsprechend der Dicke der zu kehrenden Bohlen einstellbar ist.

An den beiden Endstellungen, die die Querverschiebung der Walzenbürste 7 begrenzen, sind Endschalter vorgesehen, die einen Schaltimpuls auslösen, sobald die die Walzenbürste tragenden Schlitten die eine oder andere Endstellung erreicht haben. In diesem Falle wird die Walzenbürste 7 solange stillgesetzt, bis die Bohlen mit Hilfe der Hebevorrichtung 11 angehoben sind, um sie auf ihrer Unterseite abkehren zu können.

Die Querverschiebung der Walzenbürste 7 setzt einmal dann ein, wenn die Förderketten 3 die auf ihr liegenden Bohlen unter die Walzenbürste gebracht haben und stillstehen. Der Rücklauf der Walzenbürste setzt dann ein, wenn das Anheben der Bohlen durch die Hebevorrichtung 11 beendet ist. Sobald die von der Hebevorrichtung angehobenen Bohlen nach Abkehren ihrer Unterseite zur Stapelvorrichtung gebracht werden, kann schon eine neue Bohlenlage unter die Walzenbürste 7 gebracht werden, so dass das Abkehren zügig abläuft, wobei der Arbeitsablauf zweckmässig mit dem Zersägen des Stammes in Bohlen abgestimmt ist.

## Patentansprüche

1. Einem Vollgatter nachgeordnete Vorrichtung zum beidseitigen Abkehren des Sägemehls von nebeneinander liegenden Holzbohlen mit einer rotierenden Walzenbürste, dadurch gekennzeichnet, dass die Walzenbürste (7) oberhalb eines die Bohlen haltenden Traggerüstes (1) und unterhalb einer Bohlenhebevorrichtung (11) quer zu ihrer Drehachse waagerecht verschiebbar angeordnet ist.

2. Vorrichtung nach Anspruch 1, dadurch gekennzeichnet, dass die Walzenbürste (7) höhenverstellbar ist.

3. Vorrichtung nach Anspruch 1, dadurch gekennzeichnet, dass die Enden der Bürstenachse (8) in je einem Schlitten (9, 10) gelagert sind und dass die Schlitten auf zwei im Abstand zueinander angeordneten, waagerechten Schienen über Ketten angetrieben hin- und herverschiebbar sind.

4. Vorrichtung nach einem der Ansprüche 1 bis 3, dadurch gekennzeichnet, dass das die Bohlen haltende Traggerüst (1) eine rutschfeste Bohlenauflagefläche (4) aufweist.

5. Vorrichtung nach einem der Ansprüche 1 bis 3, dadurch gekennzeichnet, dass an den beiden Enden der Vorschubbewegungsstrecke der Walzenbürste (7) Endschalter angeordnet sind, die mit dem Antrieb einer Zuführvorrichtung für den Bohleneintrag und dem Antrieb der Hebevorrichtung (11) verbunden sind.

6. Verfahren zum beidseitigen Abkehren des Sägemehls von Holzbohlen mittels einer rotierenden Walzenbürste, dadurch gekennzeichnet, dass mehrere Bohlen nebeneinanderliegend einem Traggerüst (1) zugeführt werden, dass die rotierende Walzenbürste (7) auf der Oberseite der Bohlen in Bohlenlängsrichtung quer zu ihrer Drehachse verschoben wird, dass die Bohlen durch eine Hebevorrichtung (11) angehoben werden, dass die rotierende Walzenbürste unter Beibehalten ihrer Drehrichtung auf der Unterseite der hochgehobenen Bohlen zurückgezogen wird und dass die beidseitig gekehrten Bohlen einer Stapelvorrichtung (12) durch Querverschieben und Senken der Hebevorrichtung zugeführt werden.

## Revendications

1. Dispositif, agencé en aval d'une scie verticale à cadre à plusieurs lames, pour balayer la sciure des deux faces de planches de bois, disposées côte-à-côte, à l'aide d'une brosse cylindrique rotative, caractérisé par le fait que la brosse cylindrique (7) est agencée au-dessus d'un bâti (1) supportant les planches (2) et au-dessous d'un mécanisme de levage (11) des planches, de façon à pouvoir déplacer la brosse horizontalement dans une direction transversale par rapport à son axe de rotation.

2. Dispositif selon la revendication 1, caractérisé par le fait que le brosse cylindrique (7) est réglable en hauteur.

3. Dispositif selon la revendication 1, caractérisé par le fait que les extrémités (8) de l'axe de la brosse (7) sont montées chacune dans un coulisseau (9, 10) et que ces coulisseaux sont entraînés suivant un mouvement de va-et-vient par des chaînes sur deux rails horizontaux espacées entre eux.

4. Dispositif selon l'une quelconque des Revendications 1 à 3, caractérisé par le fait que le bâti (1) supportant les planches comporte une surface anti-dérapante (4) sur laquelle on dépose les planches (2).

5. Dispositif selon l'une quelconque des Revendications 1 à 3, caractérisé par le fait qu'aux deux extrémités de la course d'avance de la brosse cylindrique (7) il est prévu des interrupteurs fin de course reliés à la commande d'un dispositif d'amenage des planche ainsi qu'à la commande du mécanisme de levage (11).

6. Procédé pour balayer la sciure des deux faces de planches en bois à l'aide d'une brosse cylindrique rotative, caractérisé par le fait que l'on dirige plusieurs planches disposées côte-à-côte vers un bâti-support (1), que la brosse cylindrique rotative (7) est déplacée transversalement par rapport à son axe de rotation et dans le sens longitudinal de la planche, sur la face supérieure de celle-ci, que les planches sont soulevées à l'aide d'un dispositif de levage (11), que la brosse cylindrique rotative, tout en conservant son sens de rotation, est appliquée contre la face inférieure de la planche ainsi soulevée et que les planches balayées sur les deux faces sont ensuite dirigées par translation transversale suivie d'un mouvement descendant vers un dispositif d'empilage (12).

### Claims

1. A device, arranged subsequent to a multiple-blade saw-frame, for the two-sided sweeping of sawdust from wooden planks, lying side-by-side, said device comprising a rotating roller brush, characterised in that the roller brush (7) is arranged so as to be horizontally displaceable transversely to its axis of rotation above a supporting framework (1) holding the planks and below a plank lifting device (11).

2. A device according to claim 1, characterised in that the roller brush (7) is adjustable in height.

3. A device according to claim 1, characterised in that the ends of the brush axis (8) are mounted in one sliding carriage (9, 10) each and in that the sliding carriages are displaceable to and fro, driven by way of chains on two horizontal rails arranged at a spacing relative to one another.

4. A device according to any one of claims 1 to 3, characterised in that the supporting framework (1) holding the planks has a non-skid plank bearing surface (4).

5. A device according to any one of claims 1 to 3, characterised in that limit switches which are connected to the drive of a feed device for the plank entry and the drive of the lifting device (11) are arranged at the two ends of the feed motion stretch of the roller brush (7).

6. A method for the two-sided sweeping of sawdust from wooden planks by means of a rotating roller brush, characterised in that several planks are fed lying side-by-side to a supporting framework (1), in that the rotating roller brush (7) is displaced transversely to its axis of rotation on the top side of the planks in the longitudinal direction of the planks, in that the planks are raised by a lifting device (1), in that the rotating roller brush, whilst maintaining its direction of rotation, is drawn back on the underside of the raised planks and in that the planks swept on both sides are fed to a stacking device (12) by transverse displacement and lowering of the lifting device.

Fig. 1

Fig. 2

0 048 766

Fig. 3

Fig. 4

9